# EUROPEAN PATENT APPLICATION

(11) **EP 4 769 262 A1**
(43) Date of publication of application: **01.07.2026**
(21) Application number: 25222445.6
(22) Date of filing: 11.12.2025
(51) Int. Cl.: G06Q 10/06, G06Q 10/0631, G06Q 10/0639, G06Q 50/02, A01D 34/00

(54) **INFORMATION PROVIDING METHOD, INFORMATION PROCESSING APPARATUS, INFORMATION PROCESSING SYSTEM, AND PROGRAM**

(30) Priority: 27.12.2024 JP 2024233076
(71) Applicant: HONDA MOTOR CO., LTD., Tokyo 105-8404 (JP)
(72) Inventor: NISHIMIYA, Kenji, Wako-shi, Saitama, 3510193 (JP); OCHIAI, Patrick Yoshihiro, Wako-shi, Saitama, 3510193 (JP); SHAH, Nikunj, Wako-shi, Saitama, 3510193 (JP)
(74) Representative: Kiwit, Benedikt

(57) **Abstract**

An information providing method for providing information to a work-related person including any one of a worker who performs work on a work site, a supervisor who supervises the worker, a manager of the work site, and an owner of the work site, the information providing method comprising: acquiring a state of the work site; generating display information to be displayed on display means (304) of a terminal (30), used by the work-related person, based on the acquired state of the work site; and displaying the generated display information on the display means.

## Description

### BACKGROUND OF THE INVENTION

### Field of the Invention

The present invention relates to an information providing method, an information processing apparatus, an information processing system, and a program.

International Publication No. 2020/090038 discloses a technique for specifying the content of a failure having occurred in a work site based on a captured image of the work site, and controlling an autonomous work machine based on the specified content of the failure.

However, in the technique described in International Publication No. 2020/090038, it is difficult for a work-related person to easily recognize information on a state of the work site, and thus, for example, there is a problem that the occurrence of diseases of lawn grass, signs of insect pests, and the like are likely to be overlooked in the work site.

### SUMMARY OF THE INVENTION

The present invention has been made in view of the above problem, and provides a technique for enabling a work-related person to easily recognize information on a state of a work site.

According to one aspect of the present invention, there is provided an information providing method as specified in claim 1. Optional features are specified in claims 2 to 11.

According to one aspect of the present invention, there is provided an information processing apparatus as specified in claims 12-13.

According to one aspect of the present invention, there is provided an information processing system as specified in claim 14.

According to one aspect of the present invention, there is provided a program as specified in claim 15.

### BRIEF DESCRIPTION OF THE DRAWINGS

FIG. 1 is a diagram illustrating a configuration example of an information processing system according to one embodiment;
FIG. 2 is a diagram illustrating an example of a hardware configuration of a work machine according to one embodiment;
FIG. 3 is a diagram illustrating an example of a hardware configuration of a server apparatus according to one embodiment;
FIG. 4 is a diagram illustrating an example of a hardware configuration of an information processing apparatus according to one embodiment;
FIG. 5 is a diagram illustrating an example of a functional configuration of the server apparatus according to one embodiment;
FIG. 6 is a diagram illustrating an example of a processing sequence of the information processing system according to one embodiment;
FIG. 7 is a flowchart illustrating a procedure of processing executed by the server apparatus according to one embodiment;
FIG. 8 is a view illustrating a display example of display information according to one embodiment;
FIG. 9 is a view illustrating another display example of the display information according to one embodiment;
FIG. 10 is a view illustrating a recording example of a state of a work site according to one embodiment; and
FIG. 11 is an explanatory view of an attachment position of a state sensor according to one embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <System Configuration>

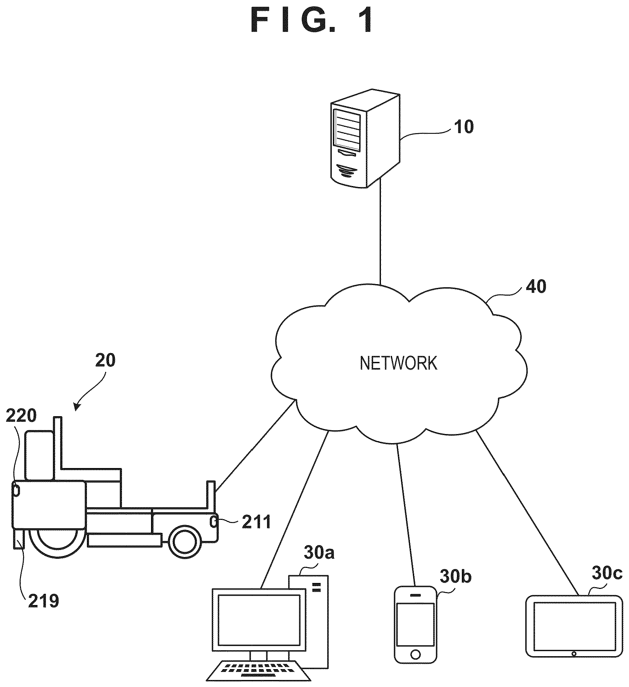

FIG. 1 is a diagram illustrating a configuration example of an information processing system according to the present embodiment. In FIG. 1, reference numeral 10 denotes a server apparatus (an information processing apparatus). Reference numeral 20 denotes a work machine that is, for example, a grass mower or a lawn mower, but is not limited thereto. The work machine according to the present embodiment is a riding work machine, but may be operable as an autonomous work machine without being operated by an occupant. In addition, the work machine may be an unmanned autonomous work machine. Reference numerals 30a to 30c denote information processing apparatuses, and terminal devices possessed or owned by a user. Reference numeral 30a denotes a personal computer, reference numeral 30b denotes a smartphone, and reference numeral 30c denotes a tablet terminal. The user can use at least one of these. Any one of the information processing apparatuses 30a to 30c is also referred to as an information processing apparatus 30. The information processing apparatus 30 is an information processing apparatus (an information providing apparatus) that provides information to a work-related person including any one of a worker who performs work on a work site, a supervisor who supervises the worker, a manager of the work site, and an owner of the work site. In addition, the server apparatus 10 may operate as the information processing apparatus that provides information to the work-related person. Reference numeral 40 denotes a network. The server apparatus 10, the work machine 20, and the information processing apparatus 30 are connected in a communication-enabling manner via the network 40.

### <Hardware Configuration>

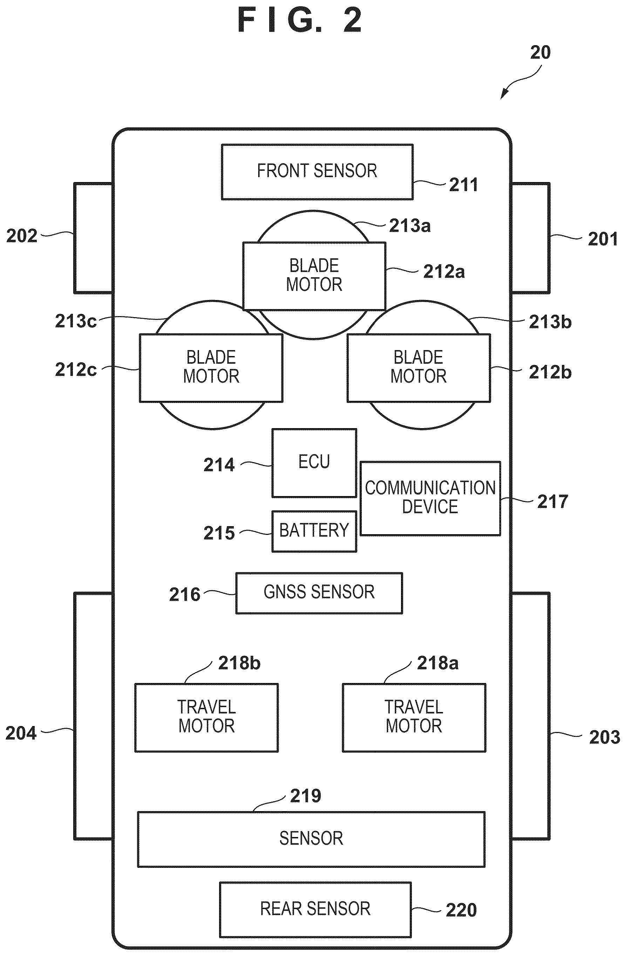

FIG. 2 is a diagram illustrating an example of a hardware configuration of the work machine according to the present embodiment. The work machine 20 includes a right front wheel 201, a left front wheel 202, a right rear wheel 203, and a left rear wheel 204. In the present embodiment, the rear wheels are drive wheels. The work machine 20 further includes a front sensor 211, blade motors 212a to 212c, blades 213a to 213c, an ECU 214, a battery 215, a GNSS sensor 216, a communication device 217, travel motors 218a to 218b, a state sensor 219, and a rear sensor 220. The blade motors 212a to 212c are also collectively referred to as a blade motor 212. The blades 213a to 213c are also collectively referred to as a blade 213. The travel motors 218a to 218b are also collectively referred to as a travel motor 218.

The front sensor 211 is a stereo camera that captures an image of the front of the work machine 20. The blade motor 212 drives the blade 213. The ECU 214 is an electronic control unit, and controls various operations of the work machine 20. The battery 215 is a drive source of the work machine 20.

The GNSS sensor 216 is a sensor that receives a satellite signal of a global navigation satellite system. A position of the work machine 20 can be measured using the signal received by the GNSS sensor 216. The communication device 217 performs wired and/or wireless communication with another device. The travel motor 218a drives the right rear wheel 203. The travel motor 218b drives the left rear wheel 204. The travel motors are individually operable and capable of performing a turning operation at the spot.

The state sensor 219 is a sensor for detecting a state (for example, a state of soil) of a work site. The state sensor 219 may include a soil sensor that monitors the state of soil. The soil sensor is a sensor capable of monitoring and visualizing the state (electrical conductivity (EC)) of soil in agriculture or the like. There is a correlation between an EC value and a nutrient concentration in soil, and the EC (electrical conductivity) is higher as a nutrient content in soil increases. A nutritional state of land can be evaluated from a detection value of the soil sensor.

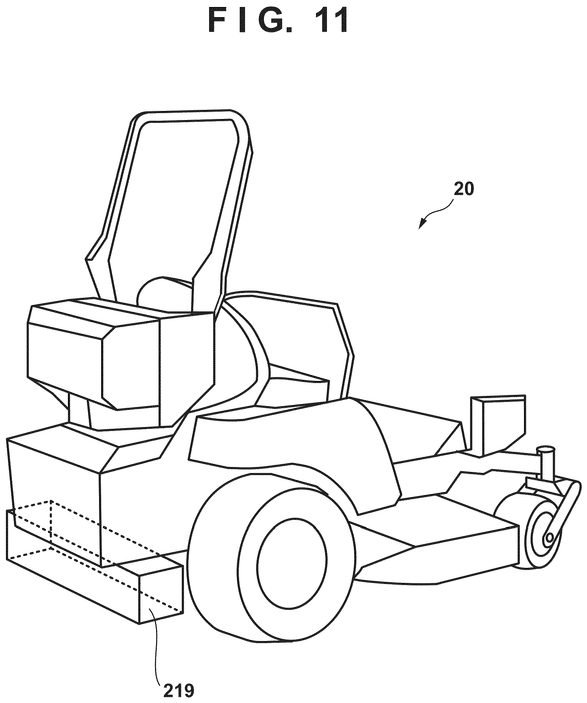

As illustrated in FIG. 11, for example, the state sensor 219 is a rod-shaped sensor provided on a lower surface at the rear of the work machine 20 and extending in the left-right direction so as to be directed rearward and downward in a traveling direction of the work machine 20, and can detect a state of a position where the work machine 20 has traveled. For example, since the state sensor 219 extends from the right rear wheel 203 to the left rear wheel 204, it is possible to detect the state of the work site in a wide range by one travel. However, the state sensor 219 is not limited to extending in the left-right direction, and may extend in an oblique direction with respect to the traveling direction of the work machine 20 or may extend in a direction parallel to the traveling direction.

The state sensor 219 may include a sensor (or a camera) for detecting at least one of a cut state of a lawn, a growth state of lawn, and a health state of lawn, and the front sensor 211 and/or the rear sensor 220 may also be collectively referred to as the state sensor 219. That is, the state sensor 219 may be a sensor for detecting, as the state of the work site, at least one of the cut state of the lawn, the growth state of lawn, the health state of lawn, and the state of soil. The rear sensor 220 is a stereo camera that captures an image of the rear of the work machine 20.

Although three sets of the blade 213 and the blade motor 212 for driving the blade are provided in the present embodiment, the number thereof is not limited.

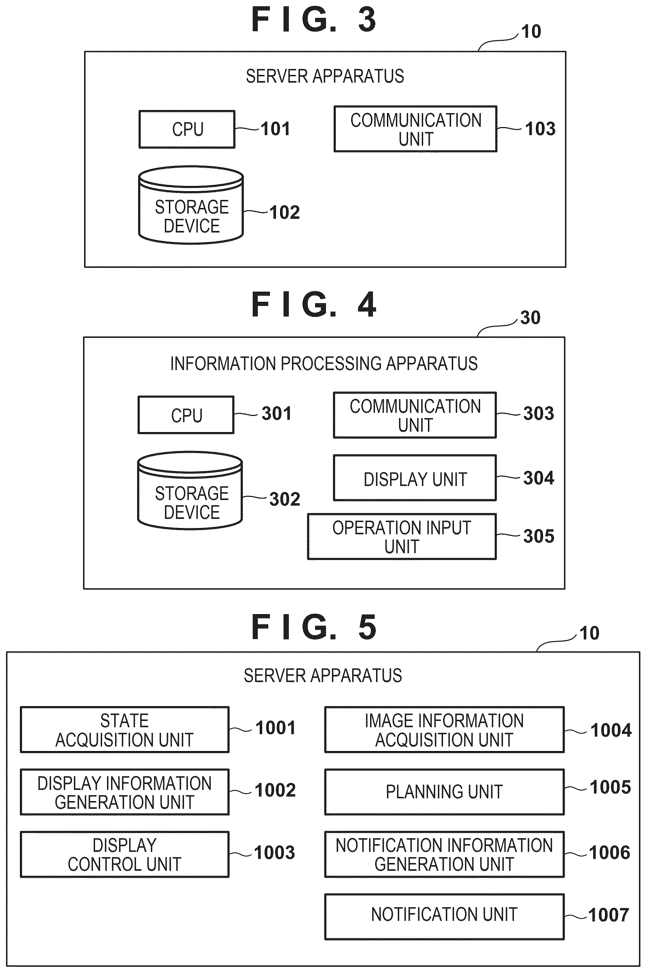

FIG. 3 is a diagram illustrating an example of a hardware configuration of the server apparatus according to the present embodiment. The server apparatus 10 includes a CPU 101, a storage device 102, and a communication unit 103. A control operation of the server apparatus 10 is achieved by the CPU 101 reading and executing a computer program stored in the storage device 102. The CPU 101 may be one or more CPUs. The storage device 102 is one or more memories that store several types of information. For example, information that has been received from another device, a computer program to be read and executed by the CPU 101, and the like are stored. The communication unit 103 has a function of communicating with another device in a wired or wireless manner through the network 40.

FIG. 4 is a diagram illustrating an example of a hardware configuration of the information processing apparatus according to the present embodiment. The information processing apparatus 30 includes a CPU 301, a storage device 302, a communication unit 303, a display unit 304, and an operation input unit 305. A control operation of the information processing apparatus 30 is achieved by the CPU 301 reading and executing a computer program stored in the storage device 302. The CPU 301 may be one or more CPUs. The storage device 302 is one or more memories that store several types of information. For example, information that has been received from another device, a computer program to be read and executed by the CPU 301, and the like are stored.

The communication unit 303 has a function of communicating with another device in a wired or wireless manner through the network 40. The display unit 304 displays various types of information to the user. The operation input unit 305 receives an operation input from the user. The operation input unit 305 can include a keyboard, a mouse, a touch panel, and the like.

### <Functional Configuration>

Next, an example of a functional configuration of the server apparatus according to the present embodiment will be described with reference to FIG. 5. The server apparatus 10 includes a state acquisition unit 1001, a display information generation unit 1002, a display control unit 1003, an image information acquisition unit 1004, a planning unit 1005, a notification information generation unit 1006, and a notification unit 1007.

The state acquisition unit 1001 acquires a state of a work site. The state of the work site may be acquired by a sensor or a camera mounted on the work machine 20 that performs work in the work site. Alternatively, the state of the work site may be acquired by a sensor or a camera fixed to the work site. Furthermore, the state of the work site may be acquired by a sensor or a camera mounted on an autonomous flying object that flies above the work site. The state acquisition unit 1001 can acquire the state of the work site by receiving the state of the work site from the work machine 20, the autonomous flying object, or a fixedly installed sensor or camera.

Based on the state of the work site acquired by the state acquisition unit 1001, the display information generation unit 1002 generates display information to be displayed on the display unit 304 of the information processing apparatus 30 (a terminal device used by the work-related person). The display control unit 1003 transmits the display information generated by the display information generation unit 1002 to the information processing apparatus 30, and causes the display unit 304 of the information processing apparatus 30 to display the display information.

The image information acquisition unit 1004 acquires image information of the work site. For example, the image information (a captured image) of the work site captured by a front camera and/or a rear camera of the work machine 20 is received and acquired from the work machine 20. Alternatively, the image information of the work site captured from above by a camera included in an autonomous flying object (not illustrated) such as a drone may be acquired from the autonomous flying object.

The planning unit 1005 plans work in the work site based on the state of the work site acquired by the state acquisition unit 1001. The notification information generation unit 1006 generates notification information for notifying the information processing apparatus 30 (the terminal device used by the work-related person) of work planned by the planning unit 1005. The notification unit 1007 notifies the information processing apparatus 30 (the terminal device used by the work-related person) of the notification information generated by the notification information generation unit 1006. The notification can be performed by transmitting the notification information to the information processing apparatus 30.

### <Processing>

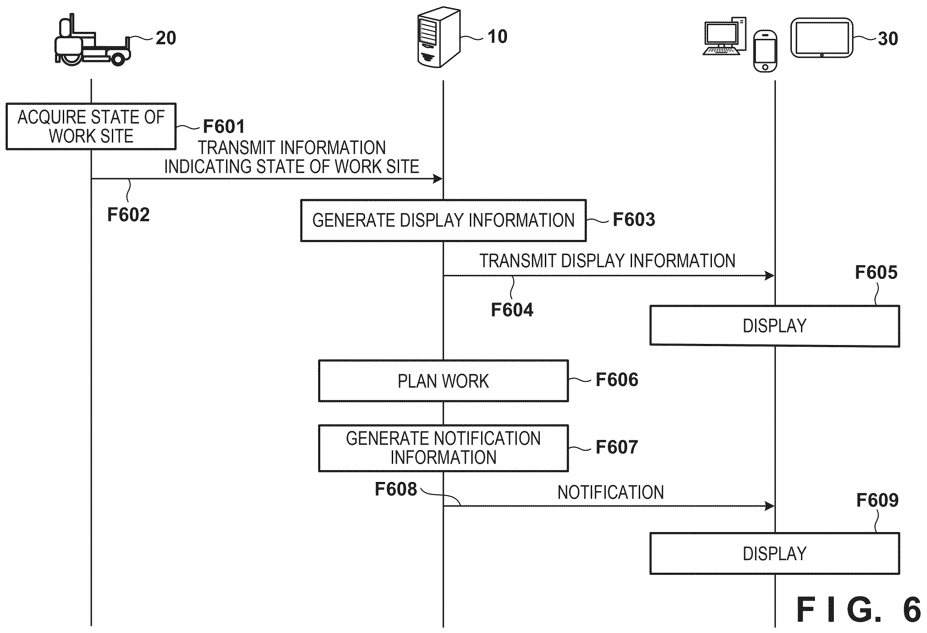

Next, processing of the information processing system according to one embodiment will be described with reference to a processing sequence of FIG. 6. In F601, the state sensor 219 of the work machine 20 acquires information on a state (for example, a growth state of lawn grass) of a work site while performing work (for example, lawn mowing work and grass mowing work) in the work site. The work machine 20 performs the work while associating position information of the work machine 20 calculated from reception information acquired via the GNSS sensor 216 with a detection value of the state sensor 219.

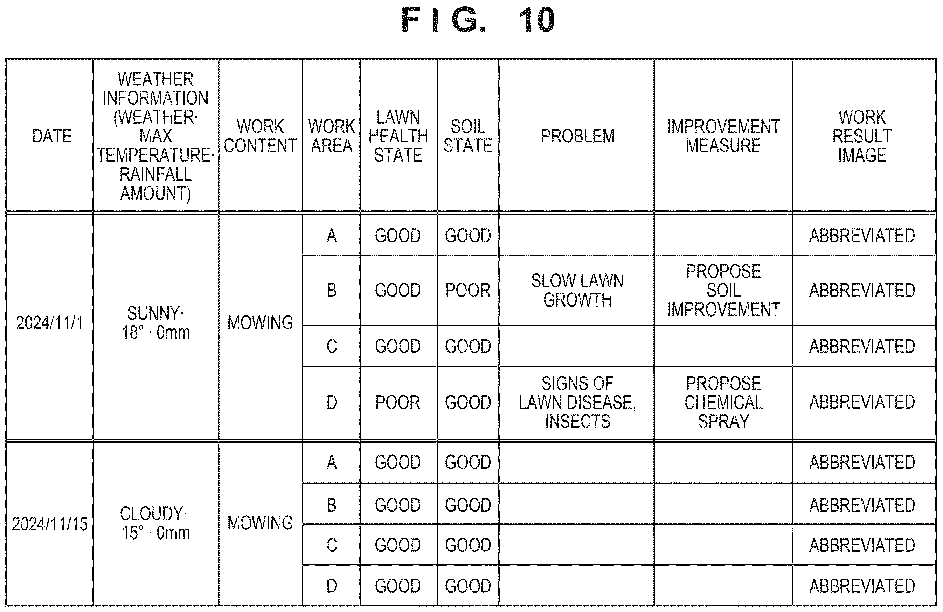

Here, FIG. 10 is a view illustrating a recording example of the state of the work site according to the present embodiment. The date of work, weather information of the work day, the content of work, a work area in the work site, a health state of lawn, a state of soil, a problem, an improvement measure, and an image of a work result are recorded in association with each other. An example of November 1, 2024 is a record of when it was sunny, the highest temperature was 18 °C, and the rainfall was 0 mm. Both the health state of lawn and the state of soil are good in a work area A and a work area C which constitute the work site. In addition, in a work area B, the health state of lawn is good, but the state of soil is poor, and it has been proposed that the problem is slow growth of the lawn and the improvement measure is to improve the soil (to apply a nutrient, a fertilizer, or the like). The slow growth of the lawn may be determined from a result of comparison with a captured image of another work area.

An example of November 15, 2024 is a record of when it was cloudy, the highest temperature was 15 °C, and the rainfall was 0 mm. Both the health state of lawn and the state of soil are good in the work area A to a work area D which constitute the work site. Although the states of the work site at two different times (year/month/day) are recorded in FIG. 10, pieces of information at three or more times (year/month/day) may be recorded.

In F602, the ECU 214 of the work machine 20 transmits information indicating the state of the work site to the server apparatus 10 using the communication device 217. Note that the transmission may be performed after the work machine 20 finishes work in the entire work site, or the transmission may be sequentially performed while executing the work.

In F603, the display information generation unit 1002 of the server apparatus 10 generates display information to be displayed on the display unit 304 of the information processing apparatus 30 (the terminal device used by the work-related person) based on the state of the work site received from the work machine 20. The display information may be generated such that information indicating a state of each position or each area of the work site is superimposed on a map of the work site. That is, the display information may include geographical information indicating a geographical position of the work site, and the display information may be generated such that the information indicating the state of the work site is displayed in a superimposed manner on the geographical information. In addition, the display information may be generated such that both a record at the previous work and a record at the current work can be compared.

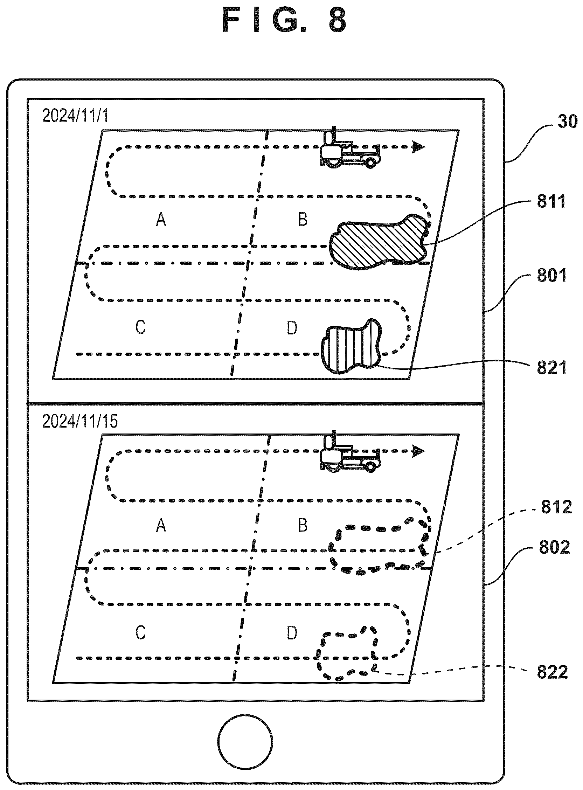

Here, FIG. 8 is a view illustrating a display example of the display information according to the present embodiment. A display area of the display unit 304 of the information processing apparatus 30 (a tablet terminal 30c) includes a display area 801 for displaying information indicating the state of the work site on November 1, 2024 and a display area 802 for displaying information indicating the state of the work site on November 15, 2024. The display area 801 and the display area 802 are displayed in the same screen (up and down). In the display area 801, the work site includes the work area A to the work area D. The work area B includes a location 811 where growth is slow as the health state of lawn. In addition, the work area D includes a location 821 where the state of soil is poor.

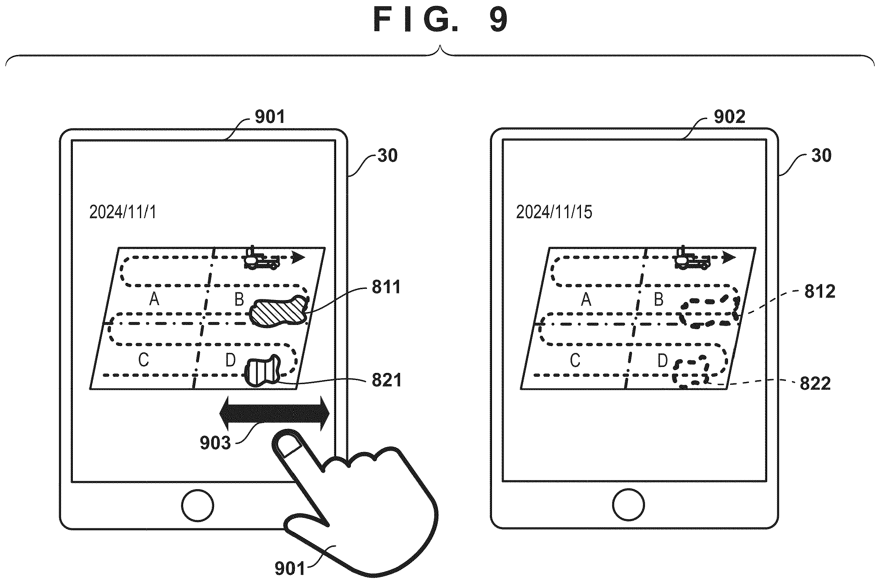

On the other hand, in the display area 802, a growth state has improved in a location 812 corresponding to the location 811 in the work area B, and the growth in the location is not slow any more. Similarly, the state of soil has been improved in a location 822 corresponding to the location 821 in the work area D, and the state of soil is no more poor in the location. FIG. 9 is a view illustrating another display example of the display information according to the present embodiment. When a user (for example, the work-related person) 901 performs a swipe operation 903 in a display area 901, the display area 901 and a display area 902 can be individually displayed. As a result, the state of the work site can be detected and visualized for each location. In addition, it is possible to perform follow-up observation for each location. Therefore, it is also possible to propose the next work plan from the result of follow-up observation.

In FIGS. 8 and 9, the display information includes geographical information indicating a geographical position of the work site. The display information is generated such that the information indicating the state of the work site is displayed in a superimposed manner on the geographic information. The geographic information may be a schematic view of the work site, or may be map information obtained by looking down the work site. In addition, the geographical position may be represented by a relative position in a predetermined site in addition to an absolute coordinate position (latitude and longitude).

In addition, the display information may include information such as an improvement measure and a problem illustrated in FIG. 10. That is, in a case where a sign of a disease of lawn, an insect pest, or the like is found in a certain work area based on the state of the work site, it is possible to notify the work-related person of information such as a location of the work area, a type of a disease state, and a degree of the disease (as the display information).

In F604, the display control unit 1003 of the server apparatus 10 transmits the display information generated by the display information generation unit 1002 to the information processing apparatus 30 in order to display the display information on the display unit 304 of the information processing apparatus 30. In F605, the information processing apparatus 30 causes the display unit 304 to display the display information received from the server apparatus 10.

In F606, the planning unit 1005 of the server apparatus 10 plans future work in the work site based on the state of the work site acquired by the state acquisition unit 1001. For example, the content of a work plan is determined from the state of the work site on November 1, 2024 illustrated in FIGS. 8 to 10. For example, in a location where the growth of lawn is slow (the location 821 of the work area D), the amount of cutting is reduced. In a case where the work machine 20 is an autonomous work machine, it may be planned to perform control at the next work in such a location so as to perform the work by raising blade heights of the blades 213 higher than those in the normal time, perform the work by stopping one or two blades 213 among the three blades 213, or set rotation speeds of the blades 213 to be lower than those in the normal time.

In addition, in a case where the work machine 20 is a work machine that does not autonomously travel but operates by being steered by the occupant, a proposal for the next work in such a location may be made so as to perform the work by raising the blade heights of the blades 213 higher than those in the normal time, perform the work by stopping one or two blades 213 among the three blades 213, or set the rotation speed of the blade 213 to be lower than those in the normal time.

In F607, the notification information generation unit 1006 of the server apparatus 10 generates notification information for notifying the information processing apparatus 30 of the content of the work planned by the planning unit 1005. In F608, the notification unit 1007 of the server apparatus 10 notifies the information processing apparatus 30 of the notification information generated by the notification information generation unit 1006. In F609, the information processing apparatus 30 causes the display unit 304 to display the notification information notified from the server apparatus 10. Note that the content of the notification information may be notified using voice, vibration, or the like.

Note that, in F606, a treatment such as soil improvement (applying a nutrient, a fertilizer, or the like) may be planned for a location where the state of soil is poor (the location 811 of the work area B). In this case, when the treatment proposed in F609 has been actually performed, input of information indicating that the treatment has been performed may be received.

As a result, it is possible to record treatment history information. In addition, in a case where the input as to whether or not the proposed treatment has been executed has not been received even after a lapse of a predetermined time (for example, 1 week, 2 weeks, or the like), a prompt for prompting the input may be displayed on the display unit 304. Alternatively, in a case where the work machine 20 is an autonomous work machine, it may be planned to automatically perform the soil improvement treatment (to make the work machine 20 itself perform work of applying a nutrient and/or a fertilizer), and the soil improvement treatment may be automatically executed during the next work.

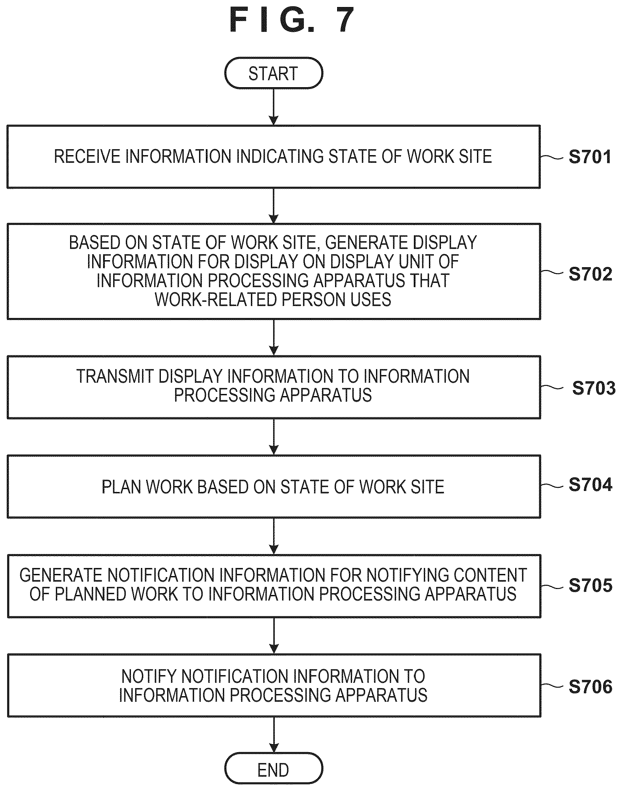

FIG. 7 is a flowchart illustrating a procedure of processing performed by the server apparatus according to the present embodiment. In S701, the state acquisition unit 1001 receives and acquires, from the work machine 20, information indicating a state of a work site detected by the state sensor 219 of the work machine 20.

In S702, the display information generation unit 1002 generates display information to be displayed on the display unit 304 of the information processing apparatus 30 used by the work-related person based on the state of the work site. In S703, the display control unit 1003 transmits the display information generated by the display information generation unit 1002 to the information processing apparatus 30 to display the display information on the display unit 304 of the information processing apparatus 30.

In S704, the planning unit 1005 plans work based on the state of the work site. In S705, the notification information generation unit 1006 generates notification information for notifying the information processing apparatus 30 of the content of the planned work. In S706, the notification unit 1007 notifies the information processing apparatus 30 of the notification information generated in S705.

Note that, for generating the display information, the server apparatus 10 may acquire and use image information of the work site acquired by the work machine 20, a flying object such as a drone that captures an image of the work site, or a fixedly installed camera or sensor. For example, in F603 and S702, the display information may be generated such that the information indicating the state of the work site is displayed in a superimposed manner on the image information.

As described above, in the present embodiment, the state of the work site is acquired, and the display information is generated based on the state of the work site and is displayed on the display unit of the terminal used by the work-related person. As a result, the work-related person can easily recognize the information on the state of the work site.

### [Modifications]

Although an example in which the server apparatus 10 executes main processing has been described in the above-described embodiment, the present invention is not limited to this example. The work machine 20 may perform processing up to generation of display information, In this case, the display information generated by the work machine 20 may be transmitted to the information processing apparatus 30 via the server apparatus 10 or directly without passing through the server apparatus 10. Similarly, the work machine 20 may plan work, generate notification information, or acquire image information.

In this case, the content of the work planned by the work machine 20, the notification information generated by the work machine 20, or the image information acquired by the work machine 20 may be transmitted to the information processing apparatus 30 via the server apparatus 10 or directly without passing through the server apparatus 10. In addition, the information processing apparatus 30 may execute processing such as generation of display information, planning of work, generation of notification information, and acquisition of image information. Any one of the work machine 20, the server apparatus 10, and the information processing apparatus 30 can execute each process in the above-described embodiment, and a specific apparatus does not necessarily execute the entire processing.

As illustrated in FIGS. 8 and 9, an example in which a location of a work area having a problem (a poor state) is displayed in an identifiable manner has been described in the above-described embodiment, but the present invention is not limited to this example. A work area having no problem (a good state) may also be displayed in an identifiable manner. In addition, a location of a work area whose state has been improved as compared with that in the previous work may be highlighted. On the contrary, a location of a work area whose state has deteriorated as compared with that in the previous work may be highlighted, or a warning may be issued.

Although an example in which a work plan is proposed has been described in the above-described embodiment, augmented reality (AR) may be displayed on the tablet terminal 30c at the time of proposal. For example, an icon or the like indicating the proposal content may be displayed in a superimposed manner on an image obtained by capturing a work site, and details of the proposal content of a work plan may be displayed when the icon is tapped.

In addition, a weather forecast may be considered when a work plan is proposed. The status of growth may be predicted based on a current growth state of lawn in a work site and information on the weather forecast, and it may be proposed to execute work, for example, 10 days later or half a month later.

In addition, an example in which the server apparatus 10 connected to the work machine 20 via the network 40 mainly executes processing has been described in the above-described embodiment, but the present invention is not limited to this example. For example, the above-described embodiment may be applied to an example in which a plurality of the work machines 20 are connected to each other in a communication-enabling manner, one of the work machines 20 operates as a master work machine, and the other work machine 20 operates as a slave work machine. That is, the master work machine may perform the processing of the above-described embodiment (the processing mainly executed by the server apparatus 10).

In addition, an example in which the server apparatus 10, the work machine 20, and the information processing apparatus 30 are connected via the network 40 in a communication-enabling manner has been described in the above-described embodiment, but the present invention is not limited to this example. For example, an edge server may be provided instead of the server apparatus 10, and only necessary data may be accumulated in a cloud. As a result, it is possible to suppress all pieces of data from being concentrated in the cloud. Specifically, the edge server may acquire data from the work machine 20, execute the processing of the above-described embodiment, and store, in the cloud, the acquired data and the processing result in the edge server.

For example, the edge server may generate display information based on a state of a work site, and store the generated display information in the cloud. As a result, the information processing apparatus 30 can acquire necessary data from the cloud. When edge computing is utilized as described above, only necessary data is sent to the cloud while data processing is safely performed at high speed on the edge server side. Thus, the amount of communication can be suppressed, and a load on the network can be reduced.

In addition, the front sensor 211 and/or the rear sensor 220 described in the above-described embodiment may be a camera capable of capturing a normalized difference vegetation index (NDVI) image. A normalized difference vegetation index (NDVI) is an index indicating the distribution activity of vegetation. The NDVI is given by the formula "NDVI = (NIR - RED)/(NIR + RED)".

Here, NIR represents reflectance in the near-infrared range, and RED represents reflectance of red light. The NDVI is represented by a numerical value normalized between -1 and 1, and has a feature that the NDVI value increases when vegetation is dense. When the NDVI image of a work site is generated, a location with good vegetation and a location with poor vegetation can be visualized. Such NDVI data may be acquired as information indicating a state of the work site. It can be determined that a location where the NDVI value is low is a location where the growth state of lawn is poor, and that a location where the NDVI value is high is a location where the growth state of lawn is good.

### <Summary of embodiments>

1. The information providing method according to the above embodiments is an information providing method for providing information to a work-related person including any one of a worker who performs work on a work site, a supervisor who supervises the worker, a manager of the work site, and an owner of the work site, the information providing method comprising: acquiring a state of the work site; generating display information to be displayed on a display unit (304) of a terminal (30), used by the work-related person, based on the acquired state of the work site; and displaying the generated display information on the display unit.

As a result, the work-related person can easily recognize the information on the state of the work site.

2. The information providing method according to the above embodiments, wherein the state of the work site includes a cut state of lawn, a growth state of the lawn, a health state of the lawn, or a state of soil.

As a result, the work-related person can easily recognize the cut state of lawn, the growth state of lawn, the health state of lawn, or the state of soil.

3. The information providing method according to the above embodiments, wherein the acquiring includes: acquiring a first state that is the state of the work site at a first time; and acquiring a second state that is the state of the work site at a second time after the first time.

This makes it possible to easily recognize a change in the state of the work site at different times.

4. The information providing method according to the above embodiments, wherein a display area configured to display the display information includes a first display area configured to display information indicating the first state; a second display area configured to display information indicating the second state.

This makes it possible to display the states of the work site at different times.

5. The information providing method according to the above embodiments, wherein the first display area and the second display area are displayed in the same screen.

This makes it possible to easily compare changes in the states of the work site at different times.

6. The information providing method according to the above embodiments, wherein the first display area and the second display area are individually displayed when a screen is swiped.

This makes it possible to recognize the change in the state of the work site at different times with a simple operation.

7. The information providing method according to the above embodiments, wherein the display information includes geographical information indicating a geographical position of the work site, and the display information is generated in such a manner that information indicating the state of the work site is displayed in a superimposed manner on the geographical information.

This makes it possible to easily recognize what state each location of the work site is in.

8. The information providing method according to the above embodiments, further comprising: acquiring image information of the work site, wherein the display information is generated in such a manner that information indicating the state of the work site is displayed in a superimposed manner on the image information.

This makes it possible to easily recognize what state each location of the work site is in. When an actual image is used, it is possible to display the state by, for example, AR display or the like, so that it is possible to easily understand what state each location of the work site is actually in.

9. The information providing method according to the above embodiments, further comprising: planning work in the work site based on the acquired state of the work site.

This makes it possible to perform appropriate work in accordance with the state of the work site.

10. The information providing method according to the above embodiments, further comprising: generating notification information for notifying the terminal of the planned work.

This makes it possible to generate information for recognizing appropriate work in accordance with the state of the work site.

11. The information providing method according to the above embodiments, further comprising: notifying the terminal of the generated notification information.

This makes it possible to recognize appropriate work in accordance with the state of the work site.

12. The information providing method according to the above embodiments, wherein the state of the work site is acquired by a sensor or a camera mounted on a work machine configured to perform work in the work site.

As a result, it is not necessary to prepare another sensor or camera other than the work machine, and the processing can be implemented with fewer components, so that necessary cost can be reduced.

13. The information providing method according to the above embodiments, wherein the state of the work site is acquired by a sensor or a camera fixed to the work site.

This makes it possible to acquire the state of the work site in the same environment, so that it is easier to compare previous work with current work.

14. The information providing method according to the above embodiments, wherein the state of the work site is acquired by a sensor or a camera mounted on an autonomous flying object configured to fly above the work site.

This makes it possible to grasp the state of the work site in a bird's eye view from above and to efficiently acquire the state of the work site.

15. The information processing apparatus according to the above embodiments is an information processing apparatus (10) configured to provide information to a work-related person including any one of a worker who performs work on a work site, a supervisor who supervises the worker, a manager of the work site, and an owner of the work site, the information processing apparatus comprising: an acquisition unit (1001) configured to acquire a state of the work site; a generation unit (1002) configured to generate display information to be displayed on a display unit (304) of a terminal (30), used by the work-related person, based on the acquired state of the work site; and a display control unit (1003) configured to cause the display unit to display the generated display information.

As a result, the work-related person can easily recognize the information on the state of the work site.

16. The information processing apparatus according to the above embodiments is an information processing apparatus (30) configured to provide information to a work-related person including any one of a worker who performs work on a work site, a supervisor who supervises the worker, a manager of the work site, and an owner of the work site, the information processing apparatus comprising: an acquisition unit configured to acquire a state of the work site; a generation unit configured to generate display information to be displayed on a display unit (304) of an information processing apparatus based on the acquired state of the work site; and a display control unit configured to cause the display unit to display the generated display information.

As a result, the work-related person can easily recognize the information on the state of the work site. In addition, the information processing apparatus 30 can achieve a series of processing alone.

17. The information processing system according to the above embodiments is an information processing system configured to provide information to a work-related person including any one of a worker who performs work on a work site, a supervisor who supervises the worker, a manager of the work site, and an owner of the work site, the information processing system comprising: an acquisition unit configured to acquire a state of the work site; a generation unit configured to generate display information to be displayed on a display unit of a terminal, used by the work-related person, based on the acquired state of the work site; and a display control unit configured to cause the display unit to display the generated display information.

As a result, the work-related person can easily recognize the information on the state of the work site.

18. The program according to the above embodiments is a program for causing a computer to execute the information providing method according to the above embodiments.

This makes it possible to achieve an information providing method as a program.

19. The storage medium according to the above embodiments is a storage medium that stores a program for causing a computer to execute the information providing method according to the above embodiments.

This makes it possible to achieve an information providing method as a storage medium.

### <Other Embodiments>

In addition, a program for achieving one or more functions that have been described in each of the embodiments is supplied to a system or an apparatus through a network or via a storage medium, and one or more processors on a computer of the system or the apparatus are capable of reading and executing the program. The present invention can also be achieved according to such an aspect.

According to the present invention, a work-related person can easily recognize information on a state of a work site.

The invention is not limited to the foregoing embodiments, and various variations/changes are possible within the spirit of the invention.

## Claims

1. An information providing method for providing information to a work-related person including any one of a worker who performs work on a work site, a supervisor who supervises the worker, a manager of the work site, and an owner of the work site, the information providing method comprising:
acquiring a state of the work site;
generating display information to be displayed on display means (304) of a terminal (30), used by the work-related person, based on the acquired state of the work site; and
displaying the generated display information on the display means.

2. The information providing method according to claim 1, wherein the state of the work site includes a cut state of lawn, a growth state of the lawn, a health state of the lawn, or a state of soil.

3. The information providing method according to claim 1 or 2, wherein
the acquiring includes:
acquiring a first state that is the state of the work site at a first time; and
acquiring a second state that is the state of the work site at a second time after the first time.

4. The information providing method according to claim 3, wherein
a display area configured to display the display information includes
a first display area configured to display information indicating the first state;
a second display area configured to display information indicating the second state.

5. The information providing method according to claim 4, wherein the first display area and the second display area are displayed in the same screen.

6. The information providing method according to claim 4, wherein the first display area and the second display area are individually displayed when a screen is swiped.

7. The information providing method according to any one of claims 1 to 6, wherein
the display information includes geographical information indicating a geographical position of the work site, and
the display information is generated in such a manner that information indicating the state of the work site is displayed in a superimposed manner on the geographical information.

8. The information providing method according to any one of claims 1 to 7, further comprising:
acquiring image information of the work site,
wherein the display information is generated in such a manner that information indicating the state of the work site is displayed in a superimposed manner on the image information.

9. The information providing method according to any one of claims 1 to 8, further comprising:
planning work in the work site based on the acquired state of the work site.

10. The information providing method according to claim 9, further comprising:
generating notification information for notifying the terminal of the planned work.

11. The information providing method according to claim 10, further comprising:
notifying the terminal of the generated notification information.

12. An information processing apparatus (10) configured to provide information to a work-related person including any one of a worker who performs work on a work site, a supervisor who supervises the worker, a manager of the work site, and an owner of the work site, the information processing apparatus comprising:
acquisition means (1001) for acquiring a state of the work site;
generation means (1002) for generating display information to be displayed on display means (304) of a terminal (30), used by the work-related person, based on the acquired state of the work site; and
display control means (1003) for causing the display means to display the generated display information.

13. An information processing apparatus (30) configured to provide information to a work-related person including any one of a worker who performs work on a work site, a supervisor who supervises the worker, a manager of the work site, and an owner of the work site, the information processing apparatus comprising:
acquisition means for acquiring a state of the work site;
generation means for generating display information to be displayed on display means of an information processing apparatus based on the acquired state of the work site; and
display control means for causing the display means to display the generated display information.

14. An information processing system configured to provide information to a work-related person including any one of a worker who performs work on a work site, a supervisor who supervises the worker, a manager of the work site, and an owner of the work site, the information processing system comprising:
acquisition means for acquiring a state of the work site;
generation means for generating display information to be displayed on a display means of a terminal, used by the work-related person, based on the acquired state of the work site; and
display control means for causing the display means to display the generated display information.

15. A program comprising instructions which, when the program is executed by a computer, cause the computer to carry out the information providing method according to any one of claims 1 to 11.
